# EUROPEAN PATENT APPLICATION

(11) **EP 2 809 108 A1**
(43) Date of publication of application: **03.12.2014**
(21) Application number: 13740677.3
(22) Date of filing: 21.01.2013
(51) Int. Cl.: H04W 48/16, H04W 36/00, H04W 52/02, H04W 84/10

(54) **WIRELESS COMMUNICATION APPARATUS, WIRELESS COMMUNICATION PROGRAM, AND WIRELESS COMMUNICATION METHOD**

(30) Priority: 23.01.2012 JP 2012011077
(71) Applicant: NEC Corporation, Tokyo 108-8001 (JP)
(72) Inventor: SATOU, Masayuki, Tokyo 108-8801 (JP); SHIMOSAKA, Naoki, Tokyo 108-8801 (JP)
(74) Representative: Vossius & Partner
(86) International application number: PCT/JP2013/000259
(87) International publication number: WO 2013/111558

(57) **Abstract**

[Problem] To reduce power consumption of wireless communication terminals.

[Solution] A wireless communication apparatus comprising:
cell identification means for specifying an identifier of a cell in which communication service is provided;
control means for controlling detection of a cell around the cell in which communication service is provided and its halt, or operation of reselection of a cell and its halt; and
determination means for comparing non-target cell identifiers recorded in an ID table registering identifiers of non-target cells which are cells for which the detection is halted or cells for which the reselection is halted at the time communication service is provided, and a cell identifier which is an identifier of the cell specified by the cell identification means in which communication service is provided, and for outputting a determination result on the basis of the comparison;
wherein the control means controls the detection or the reselection on the basis of the determination result of the determination means.

## Description

### [Technical Field]

The present invention relates to a wireless communication apparatus, a wireless communication program and a wireless communication method.

### [Background Art]

The CSG (Closed Subscriber Group: closed subscriber group) function stipulated in the 3GPP (3rd Generation Partnership Project) specification emphasizes connectivity between a wireless communication terminal, and the CSG cell and the network. Therefore, the specification does not often clarify specific operations about a power reduction function of a wireless communication terminal and an optimization function of a cell selection procedure. Such operations which are not clarified (hereinafter, called as unclear operations) causes consumption of extra electric power and slowness of cell selection.

The CSG functions stipulated by the specification of the 3GPP will be explained below. An automatic detection function of the CSG cell is a function which, in case of a state of a standby state in RRC (Radio Resource Control), detects the CSG cell which is not included in report information from a cell in which communication service is provided as a Neighbor cell. Here, RRC is stipulated in the specification 3GPP TS25.331 and the specification 3GPP TS36.331.

A CSG cell as a detection target is a CSG cell with a CSG ID to which access is allowed by the operator. That is, this CSG cell is a cell with the CSG ID included in an Allowed CSG list or an Operator CSG list stipulated in the specification 3GPP TS23.122. Or the CSG cell as the detection target is a CSG cell in which communication service was provided in the past.

A wireless communication terminal makes it possible to detect a CSG cell in the neighborhood by using the automatic detection function of a CSG cell, and to select the CSG cell.

In the specification 3GPP TS25.304, there is a stipulation that, when the wireless communication terminal is provided communication service in a non CSG cell (cell which is not CSG), by using the automatic detection function, the CSG cell in the neighborhood is detected and further, the CSG cell is reselected. However, when communication service is provided in the CSG cell, the stipulation that the wireless communication terminal uses the automatic detection function to detect the other CSG cells is not defined in particular. Accordingly, the automatic detection function may be used or may not be used. This is one of the unclear operations. Also, in case that communication service is provided in the CSG cell and the CSG cell with RAT different from the RAT (Radio Access Technology) used at present is detected, there is no stipulation in particular that the wireless communication terminal selects the detected CSG cell. Accordingly, the detected CSG cell with different RAT may be reselected or may not be reselected. This is one of the unclear operations.

Next, former problems in the control of a part not stipulated in the 3GPP specification will be explained below. If automatic detection of the CSG cell starts when the wireless communication terminal is provided communication service in the CSG cell, even in case the user wants to maintain communication service provided in the same CSG cell, the detection operation starts automatically. As a result, extra electric power is consumed by the unnecessary automatic detection operation.

Also, in that case, since the CSG cell different from the user's wish is reselected, the user cannot receive services by the expected CSG. Moreover, if the automatic detection function of the CSG cell functions when communication service is provided in the CSG cell, in case a plurality of CSG cells with intensity levels of wireless wave similar to each other exists, the wireless communication terminal repeats reselection between the CSG cells. By this operation, electric power is consumed unnecessarily. Accordingly, to make the automatic detection function of the CSG cell operate unconditionally when communication service is provided in the CSG cell generates an undesirable problem in terms of power reduction.

However, in case a setting not to use the automatic detection function of the CSG cell when communication service is provided in the CSG cell is made in a wireless communication terminal, a situation can occur that communication service needs to be provided in the CSG cell different from the wish of the user. Accordingly, the wireless communication terminal should make the automatic detection of the CSG cell operate at the time of need (when communication service is preferably provided in the CSG cell more appropriate for the user). Also, operation in case a wireless communication terminal detects the CSG cell with RAT different from the RAT used at present when communication service is provided in the CSG cell makes a similar problem occur. That is, when reselection of the CSG cell with RAT different from the RAT used at present operates unconditionally, even in case reselection of the CSG cell is unnecessary, the CSG cell is reselected. As a result, electric power is consumed unnecessarily.

Also, same as mentioned above, in case reselection of the CSG cell with different RAT is necessary (when communication service is preferably provided in the CSG cell more appropriate for the user), reselection should be put into effect. To restrain the automatic detection function and the reselection function appropriately in order to realize power reduction without degrading usability of a wireless communication terminal is becoming an important issue.

As a related technology which intended to realize power reduction, there are technologies disclosed by Patent document 1 and Patent document 2. Patent document 1 discloses that a control unit of a user apparatus decides presence or absence of reselection of the CSG cell on condition whether or not a state that quality of a signal from the CSG cell is better by a predetermined threshold value than quality of a signal from a cell in which communication service is provided continues more than a predetermined reselection period. The technology disclosed by Patent document 1 reduces consumption of electric power by reselection by this method.

The technology disclosed by Patent document 2 restrains useless switching of systems in which communication service is provided, in case call regulation is not carried out in a mobile communications system of switching destination of a system in which communication service is provided, by switching the system in which communication service is provided.

Also, Patent document 3 discloses a mobile apparatus which, using a spontaneous search function which one possesses, replies to an external input, corrects functions of its own and optimizes a search method about the environment.

### [Citation List]

### [Patent document]

[Patent document 1] Japanese Unexamined Patent Application Publication No. 2010-273381
[Patent document 2] Japanese Unexamined Patent Application Publication No. 2010-141669
[Patent document 3] Japanese Unexamined Patent Application Publication No. 2011-130442

### [Disclosure of Invention]

### [Technical Problem]

Although Patent document 1 defines the conditions of reselection, the automatic detection function of the CSG cell is not disclosed at all. Accordingly, even if this formula shows the effect of reducing power consumption at the time of reselection, power consumption which occurs by the automatic detection function cannot be restrained. Also, since measurement of radio quality at the time of reselection needs electric power, perfect power reduction cannot be achieved.

Although Patent document 2 defines the switching conditions of systems in which communication service is provided, the automatic detection function of the CSG cell is not disclosed. Accordingly, even if this formula shows the effect of reducing power consumption in switching of systems in which communication service is provided, it cannot restrain power consumption which occurs by the automatic detection function of the CSG cell.

Patent document 3 discloses a spontaneous search function which corresponds to the automatic detection function. However, restraining of operation is not disclosed at all.

An object of the present invention is to solve the problems mentioned above, and to reduce power consumption of a wireless communication terminal.

### [Solution to Problem]

According to the present invention, a wireless communication apparatus can be obtained which includes: cell identification means for specifying an identifier of a cell in which communication service is provided; control means for controlling detection of a cell around the cell in which communication service is provided and its halt, or operation of reselection of a cell and its halt; and determination means for comparing non-target cell identifiers recorded in an ID table registering identifiers of non-target cells which are cells for which the detection is halted or cells for which the reselection is halted at the time communication service is provided, and a cell identifier which is an identifier of the cell specified by the cell identification means in which communication service is provided, and for outputting a determination result on the basis of the comparison; wherein the control means controls the detection or the reselection on the basis of the determination result of the determination means.

According to the present invention, a wireless communication program can be obtained which makes a computer execute: a cell identification processing for specifying an identifier of a cell in which communication service is provided; a control processing for controlling detection of a cell around the cell in which communication service is provided and its halt, or an operation of reselection of a cell and its halt; a determination processing for comparing a non-target cell identifier recorded in an ID table recording identifiers of non-target cells which are cells for which the detection is halted or cells for which the reselection is halted at the time communication service is provided, and a cell identifier which is an identifier of the cell specified by the cell identification processing in which communication service is provided, and for outputting a determination result; and the control processing for operating the detection or the reselection on the basis of the determination result of the determination processing.

According to the present invention, a wireless communication method can be obtained which includes: specifying an identifier of a cell in which communication service is provided; controlling detection of a cell around the cell in which communication service is provided and its halt, or an operation of reselection of a cell and its halt; comparing non-target cell identifier recorded in an ID table registering identifiers of non-target cells which are cells for which the detection is halted or cells for which the reselection is halted at the time communication service is provided, and a cell identifier which is an identifier of the cell in which communication service is provided, and determining; and operating the detection or the reselection on the basis of the result of this determination.

### [Advantageous Effects of Invention]

In the present invention, by controlling the automatic detection function of the CSG cell, power consumption of a wireless communication terminal can be reduced.

### [Brief Description of Drawings]

Fig. 1 is a figure illustrating a circuit configuration of a wireless communication apparatus of the first exemplary embodiment.
Fig. 2 is a figure illustrating a flow of operation which restricts automatic detection of a CSG cell of a first exemplary embodiment.
Fig. 3 is a figure illustrating a flow of operation which restricts reselection of a CSG cell of the first exemplary embodiment.
Fig. 4 is a figure illustrating a flow of operation which restricts automatic detection of a CSG cell of a second exemplary embodiment.
Fig. 5 is a figure illustrating a circuit configuration of a wireless communication apparatus of a third exemplary embodiment.
Fig. 6 is a figure illustrating a second circuit configuration of a wireless communication apparatus of the first exemplary embodiment.

### [Description of Embodiments]

### (First exemplary embodiment)

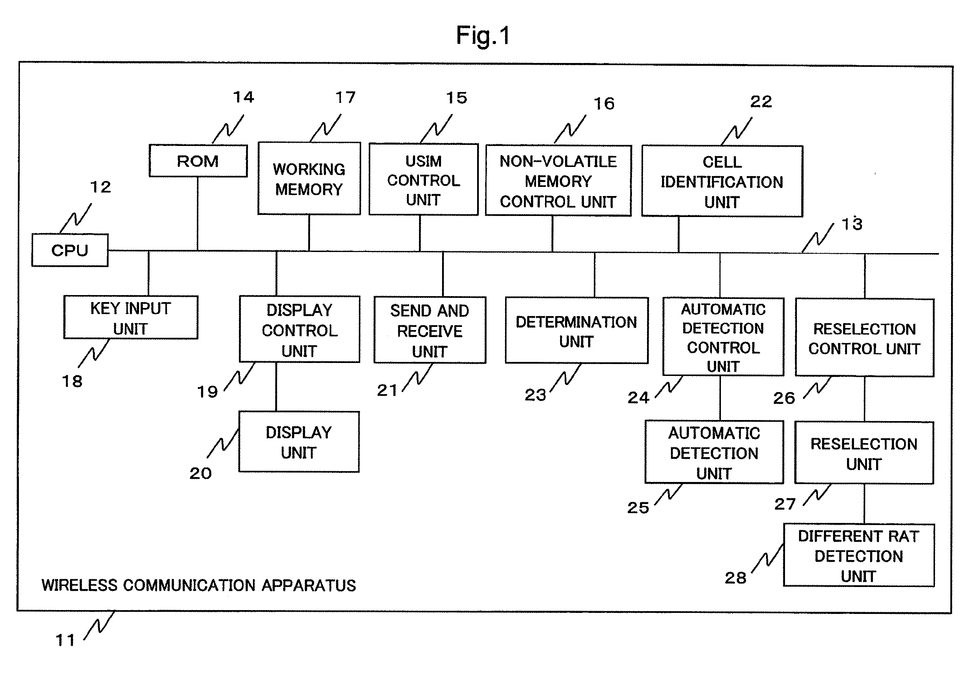

Next, the first exemplary embodiment of the present invention will be explained in detail with reference to drawings. Fig. 1 illustrates a main part of a circuit configuration of a wireless communication apparatus according to the first exemplary embodiment of the present invention. A wireless communication apparatus 11 of this exemplary embodiment is equipped with CPU 12 (CPU: Central Processor Unit, central processor unit). The CPU 12 connects with each part in the apparatus via a bus 13. The CPU 12 makes an automatic detection control unit 24 execute control of automatic detection of the CSG cell. Also, the CPU 12 makes a reselection control unit 26 execute control of reselection of the CSG cell. Also, the CPU 12 makes a determination unit 23 execute comparison of CSG IDs which are registered in a list for controlling access to CSG cells stored in a non-volatile memory control unit 16, and CSG ID of a cell in which communication service is provided and which a cell identification unit 22 identifies. As a result, the determination unit 23 outputs a determination result on the basis of the comparison. Next, the CPU 12 issues instructions to the automatic detection unit control unit 24 and the reselection control unit 26 on the basis of the determination result from the determination unit 23. Also, according to an input from a key input unit 18, the CPU 12 carries out update, deletion and addition of data registered in the list.

ROM 14 (ROM: Read Only Memory: read only memory) is a read only memory which stored fixed data such as various control programs which the CPU 12 executes.

A USIM control unit 15 and the non-volatile memory control unit 16 manage a non-volatile memory area in which an Allowed CGS list and an Operator CSG list are stored in order to realize the CSG function. The Allowed CGS list and the Operator CSG list are stipulated in the specification 3GPP TS31.102. Further, USIM is an abbreviation of Universal Subscriber Identity Module and is an IC card which is inserted into a 3G cellular phone and used. The Allowed CSG list and the Operator CSG list are generated in conformity with the specification 3GPP TS23.122. They are used when an automatic detection unit 25 executes an automatic detection function of the CSG cell and when a reselection unit 27 executes a reselection operation function of the CSG cell respectively.

In the exemplary embodiment of the present invention, a list of non-target cells, that is, a list for suppressing automatic detection of the CSG cell and a list for suppressing reselection of the CSG cell with RAT different from the RAT in use are stored in the non-volatile memory control unit 16. Here, the list for suppressing automatic detection of the CSG cell is one which recorded identifiers (CSG IDs) of CSG cells for which automatic detection is not carried out in case communication service is provided in the cell (hereinafter, also called as an automatic detection restraint target list). Also, the list for suppressing reselection of the CSG cell with RAT different from the RAT in use is one which recorded CSG IDs for which reselection of the CSG cell with RAT different from the RAT in use is not carried out in case communication service is provided in the cell. This list is also called hereinafter as a reselection restraint target list. Also, the CSG ID for which automatic detection is not carried out and the CSG ID for which reselection of the CSG cell with different RAT is not carried out are also called as a non-target cell identifier. Further, the list which registers the IDs (identifiers) of the non-target cells which are cells for which detection is halted or cells for which reselection is halted at the time communication service is provided may also be called as an ID table.

A working memory 17 is configured from RAM (Random Access Memory), and stores data which is temporarily necessary for the CPU 12 to execute a program.

The CSG ID (Identification) information of CSG which becomes a detection target in automatic detection of the CSG cell is stored in a predetermined area of the working memory 17.

Also, in reselection operation of the CSG cell, information of the Allowed CSG List and the Operator CSG List managed by the USIM control unit 15 and the non-volatile memory control unit 16 is stored in a predetermined area of the working memory 17. The working memory 17 may store other information.

The key input unit 18 is an input circuit which accepts key input from the user.

A display control unit 19 is a control circuit which controls display of a display unit 20.

The display unit 20 is located on the front side of the body of the apparatus which is not illustrated. The display unit 20 is a display apparatus of a liquid crystal panel or organic EL (EL: Electro-Luminescence, electro-luminescence) for black and white or color display. The display unit 20 may be a display apparatus of a formula other than the liquid crystal display panel or the organic EL.

A send and receive unit 21 is a circuit which sends and receives data by wireless.

The cell identification unit 22 identifies Cell ID of a cell in which the wireless communication apparatus 11 is provided communication service (cell identifier in which communication service is provided).

The automatic detection unit 25 detects the CSG cell automatically and stores the CSG ID detected.

The automatic detection control unit 24 controls operation of the automatic detection unit 25.

A different RAT detection unit 28 detects RAT which is different from the RAT in use.

The reselection unit 27 selects the RAT which the different RAT detection unit 28 detected.

The reselection control unit 26 controls operation of the reselection unit 27.

Further, instead of the automatic detection control unit 24 and the reselection control unit 26, a control unit 29 which has those functions together may be used.

Further, in this exemplary embodiment, although the determination unit 23, the automatic detection control unit 24 and the reselection control unit 26 are realized by the CPU 12 executing a program stored in the ROM 14, they may be realized by hardware which is configured by combining logic circuits.

### (Operation of the first exemplary embodiment)

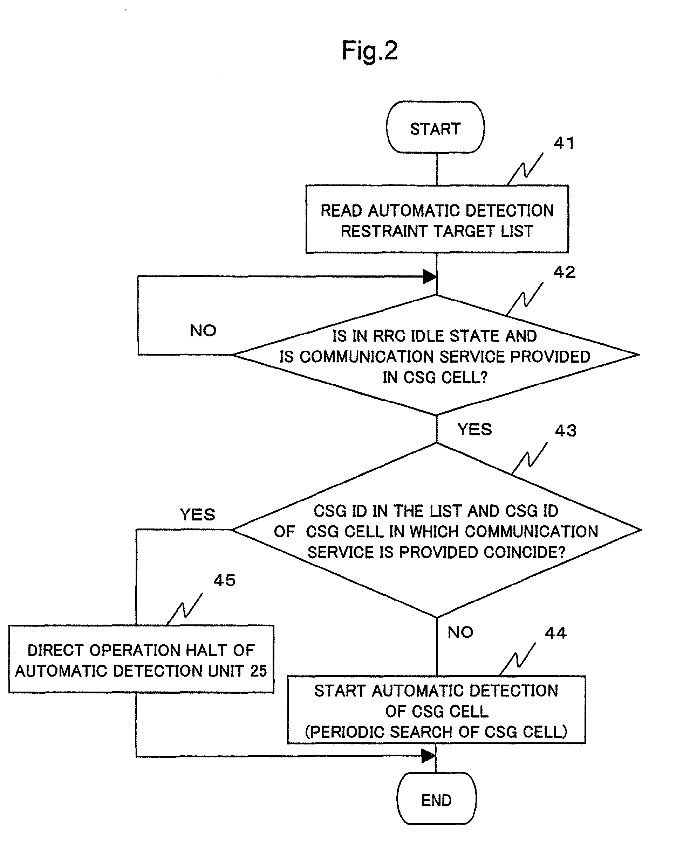

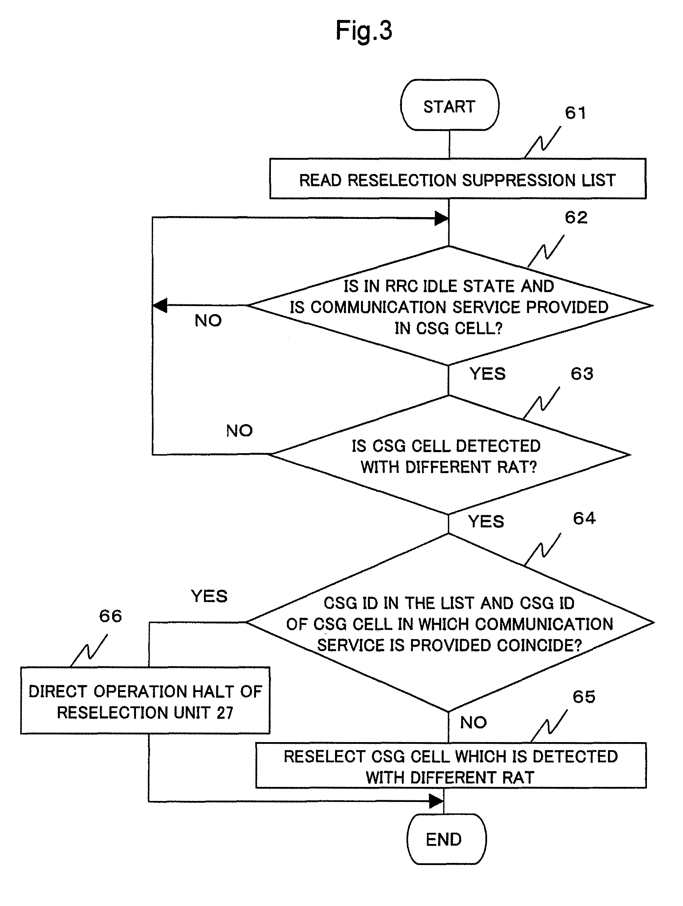

Next, operation of the first exemplary embodiment of the present invention will be explained with reference to drawings. Fig. 2 illustrates a flow of operation which restricts automatic detection of the CSG cell used in this exemplary embodiment. Fig. 3 illustrates a flow of operation which restricts reselection of the CSG cell used in this exemplary embodiment. The operation which restricts automatic detection of the CSG cell shown in Fig. 2 and the operation which restricts reselection of the CSG cell with RAT different from the RAT in use shown in Fig. 3 can be operated independently from each other. The operation which restricts automatic detection of the CSG cell will be explained below. As shown in Fig. 2, the CPU 12 of the wireless communication apparatus 11 first reads a list for suppressing automatic detection of the CSG cell (hereinafter, called as automatic detection restraint target list) from the non-volatile memory control unit 16 (Step 41). Specific targets of the CSG IDs which are registered in the list for suppressing automatic detection of the CSG cell is either of the following 1), 2) or 3).

1) The CSG IDs included in the Operator CSG list (refer to the specification 3GPP TS31.102).
2) The CSG IDs having an experience of being designated by the user through Manual CSG selection (refer to the specification 3GPP TS23.122).
3) The CSG IDs which the user or the operator accesses the non-volatile memory control unit 16 directly and registers.

In case the CSG IDs of 1) or 2) are set as the CSG cells for which automatic detection is suppressed, the user does not need to carry out manual setting of the list. In this case, the CPU 12 stores the data of the Operator CSG list or the Manual CSG selection (selection) inputted via the send and receive unit 21 in the USIM control unit 15 and the non-volatile memory control unit 16. To utilize the CSG IDs of the above-mentioned 1) or the above-mentioned 2) enables autonomous list management. The above-mentioned 3) is manual management in which the user or the operator updates the list directly.

Here, the Operator CSG list of the above-mentioned 1) is a list stipulated by the specification 3GPP TS23.122 or the specification 3GPP TS31.102. This list is a list by which the operator shows to each of the user which the CSG cell is accessible and is registered in the USIM control unit 15 or the non-volatile memory control unit 16 in advance. Manual CSG selection of the above-mentioned 2) is the operation stipulated in the specification 3GPP TS23.122. This operation enables access in the CSG cell which the user wishes by showing the CSG ID of the neighboring CSG cell to the user, and by the user designating the CSG ID.

In case contents of the above-mentioned 1) becomes the list, the contents of the list will be the same contents as the Operator CSG list managed by the USLM control unit 15 or the non-volatile memory control unit 16 in the wireless communication apparatus 11. In case contents of the above-mentioned 2) becomes the list, the CPU 12 puts into effect the Manual CSG selection of the specification 3GPP TS23.122 in the wireless communication apparatus 11, and makes the working memory 17 memorize temporarily the CSG ID which is the result and which the user designated. This CSG ID is added to the list. In case contents of the above-mentioned 3) are made the list, the list is built by the user and the operator by rewriting the list managed by the non-volatile memory control unit 16 appropriately, or by adding arbitrary CSG IDs to the list.

Next, the CPU 12 makes the cell identification unit 22 specify an ID of the cell in which the wireless communication apparatus 11 is provided communication service, and makes it determine whether the cell is the CSG cell or not. The cell identification unit 22 specifies the ID of the cell in which communication service is provided, and judges whether the ID is an ID of the CSG cell or not (Step 42). This judgment is carried out by referring to the information of the Allowed CSG List and the Operator CSG List managed by the USIM control unit 15 or the non-volatile memory control unit 16.

In case the cell identification unit 22 determines that the cell in which communication service is provided is the CSG cell (Step 42, YES), the CPU 12 carries out the operation of Step 43. That is, the CPU 12 makes the determination unit 23 determine whether or not in the RRC IDLE state and either of the CSG IDs registered in the automatic detection restraint list and the ID of the cell in which communication service is provided are equal (Step 43).

In case the cell identification unit 22 determines that the cell in which communication service is provided is not the CSG cell (Step 42, NO), the CPU 12 makes the cell identification unit 22 continue judgment processing.

In Step 43, in case there exists, among the CSG IDs in the list, the CSG ID which coincides with the CSG ID of the CSG cell in which communication service is provided, the CPU 12 directs the automatic detection control unit 24 to halt the operation of the automatic detection unit 25 (Step 45 and Step 43, YES). In Step 43, in case there exists, among the CSG IDs in the list, no CSG which coincides with the CSG ID of the CSG cell in which communication service is provided, the CPU 12 directs the automatic detection control unit 24 to make the automatic detection unit 25 operate. The automatic detection control unit 24 which received the direction makes the automatic detection unit 25 operate, and detects automatically the CSG cell around the CSG cell in which communication service is provided (Step 44 and Step 43, NO).

In this exemplary embodiment, only in case there exits, among the CSG IDs in the list, no CSG which coincides with the CSG ID of the CSG cell in which communication service is provided, the automatic detection unit 25 operates. Accordingly, compared with a case when the automatic detection unit 25 is made to operate for any CSG ID, this exemplary embodiment can reduce power consumption of the wireless communication apparatus 11

Next, the operation which restricts reselection will be explained below. As shown in Fig. 3, the CPU 12 of the wireless communication apparatus 11 reads a list for suppressing the reselection of the CSG cell with RAT different from the RAT currently in use (hereinafter, called as reselection restraint list) from the non-volatile memory control unit 16. As the reselection restraint list, similar to the automatic detection restraint list mentioned above, either of the 1) - 3) described above will be used (Step 61).

Next, the CPU 12 makes the cell identification unit 22 specify an ID of the cell in which the wireless communication apparatus 11 is provided communication service, and makes it determine whether this cell is the CSG cell or not. The cell identification unit 22 specifies the ID of the cell in which communication service is provided, and judges whether the ID is an ID of the CSG cell or not (Step 62). The cell identification unit 22 carries out this judgment by referring to the information of the Allowed CSG List and the Operator CSG List managed by the USIM control unit 15 or the non-volatile memory control unit 16.

In case the cell identification unit 22 determines that the cell in which communication service is provided is the CSG cell (Step 62, YES), the CPU 12 determines in succession whether or not the different RAT detection unit 28 detected the CSG cell with RAT different from the RAT in use (Step 63).

In case the CSG is detected with different RAT (Step 63, YES), the CPU 12 further determines whether or not communication service is provided in the CSG cell with the CSG ID which corresponds to the CSG ID registered in the reselection restraint list (Step 64).

In case the CSG is not detected with different RAT (Step 63, NO), processing from Step 62 is repeated. In case the CSG is detected with different RAT (Step 63, YES), the CPU 12 makes the determination unit 23 determine whether or not in the RRC IDLE state and either of the CSG IDs registered in the reselection restraint list and the ID of the cell in which communication service is provided are equal (Step 64).

In case the CSG ID registered in the reselection restraint list and the CSG ID of the CSG cell in which communication service is provided coincide, the CPU 12 outputs direction which makes the reselection unit 27 not put into effect reselection of the CSG cell detected (Step 66 and Step 64, YES).

In case the CSG ID registered in the list and the CSG ID of the CSG cell in which communication service is provided do not coincide, the CPU 12 makes the reselection unit 27 put into effect reselection of the CSG cell detected (Step 65 and Step 64, NO).

Further, in the description above, although an example which carries out restraint of automatic detection and restraint of reselection independently has been explained, two of them may not necessarily be independent. In addition to this formula, a formula can be adopted in which, in case of being a non-target in the restraint of automatic detection, after automatic detection is carried out, restraint of reselection is further carried out. Also, in addition to the formula, a formula is possible in which, in case of being a target in the restraint of automatic detection, restraint of reselection is further carried out.

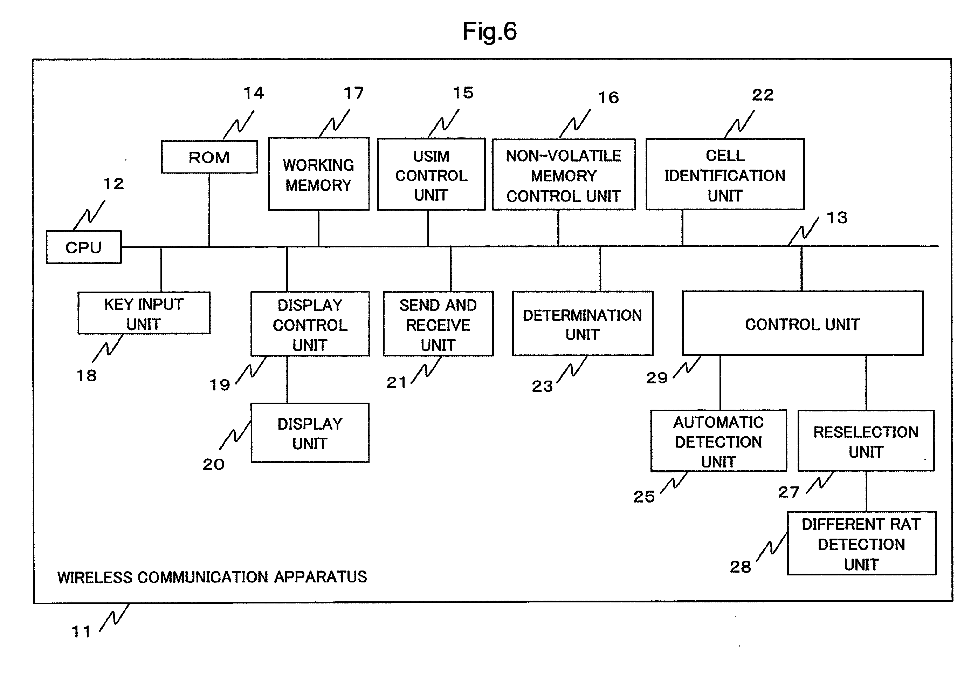

In this exemplary embodiment, although the automatic detection control unit 24 and the reselection control unit 26 are being separated, two of them may not necessarily be separated. Further, as shown in Fig. 6, the wireless communication apparatus 11 may possess the control unit 29 which integrated the function of the automatic detection control unit 24 and the reselection control unit 26 instead of the automatic detection control unit 24 and the reselection control unit 26.

### (Second exemplary embodiment)

The basic configuration of the second exemplary embodiment of the present invention is same as the first exemplary embodiment. It is different from the first exemplary embodiment in a point that additional information is set in a list of the CSG IDs for suppressing automatic detection of the CSG cell. As an example and specifically, to the list of the CSG IDs for suppressing automatic detection of the CSG cell, RAT information attached to the CSG IDs is added as an extension function.

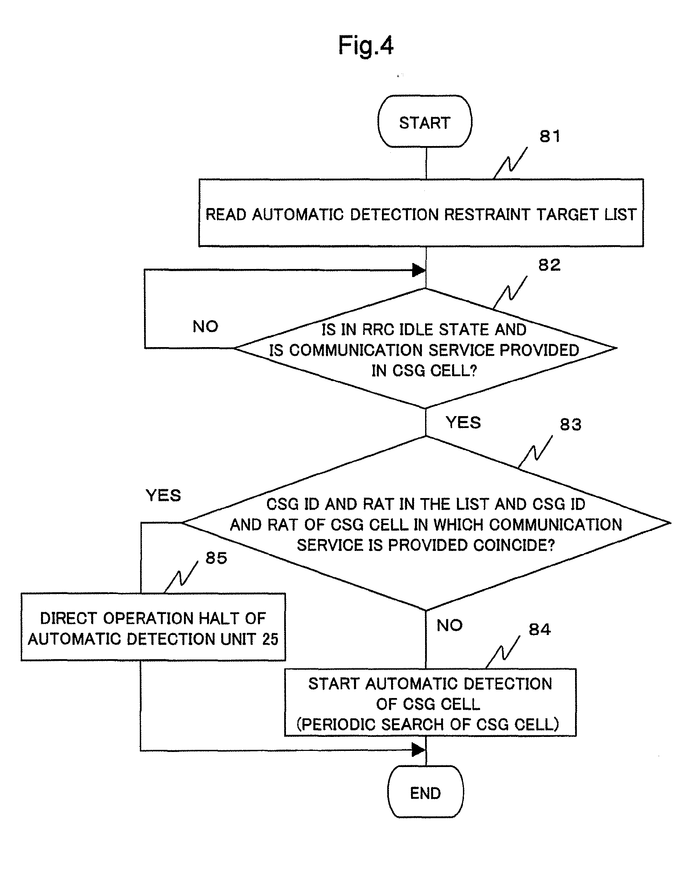

Fig. 4 illustrates a flow which controls automatic detection of the CSG cell on the basis of the CSG ID and RAT information. The list handled in Step 81 includes the CSG IDs and the RAT information which is related to the CSG IDs.

In the automatic detection restraint target list used in Step 81 of Fig. 4, respective RAT information is added to the CSG IDs of the automatic detection restraint target list in Step 41 of Fig. 2. Step 83 of Fig. 4 is different from Step 43 of Fig. 2 and the CPU 12 carried out judgment of whether or not the CSG cell is a target for which automatic detection is restrained not only on the basis of the CSG ID but also the RAT information. Operations of Steps 82, 84 and 85 of Fig. 4 are same as the operations of Steps 42, 44 and 45 of Fig. 2.

In this exemplary embodiment, although automatic detection of the CSG cell has been explained, similarly, the CPU 12 can, at the time communication service is provided in the CSG cell, control the reselection operation of the CSG cell with different RAT on the basis of the RAT information too.

In that case, the RAT information is added to the list of the CSG IDs for suppressing reselection of the CSG cell with different RAT.

Information which can be added is not limited to the RAT information. By adding time zone information, it becomes possible to restrain the automatic detection unit 22 from automatically detecting the CSG cell only in case, in a specific time zone, the CSG ID which is registered in the list of the CSG IDs for which automatic detection is restrained and the CSG ID of a cell in which communication service is provided are identical.

Thus, by additional information being added to the information of CSG ID, in this exemplary embodiment, restraint of automatic detection is carried out under a finer setting than the first exemplary embodiment.

Further, as a method of registration and deletion of the list of CSG IDs for suppressing automatic detection of the CSG cell, or the list of CSG IDs for suppressing reselection of the CSG cell with different RAT, followings can be applied.

1) The cell identification unit 22 counts for each CSG ID a number of times that communication service is provided in the CSG cell per unit time. In case this number of times that communication service is provided exceeds a threshold value, the CSG ID is registered in the ID table. Also, in case it is below a threshold value set separately, the CSG ID is deleted from the ID table.
2) In case a total number of times which the user selected in the Manual CSG selection exceeds a threshold value, the CSG ID is registered in the list. Also, in case a number of times of not being designated successively by the user in the Manual CSG selection is below a threshold value set separately, the CSG ID is deleted from the list.
3) CSG IDs of the CSG cell which are found currently are shown to the user, and among them, the CSG IDs which the user designates are registered in the list or deleted.

### (Third exemplary embodiment)

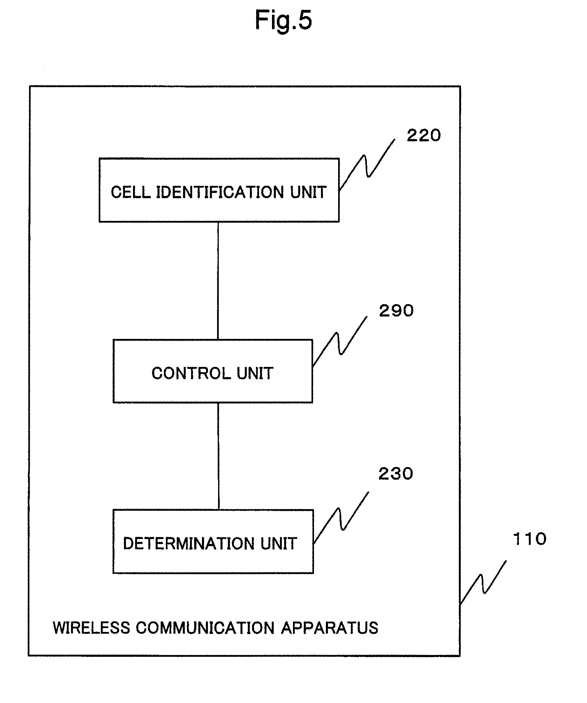

The third exemplary embodiment of the present invention will be explained by Fig. 5. This exemplary embodiment is a wireless communication apparatus 110 which includes: a cell identification unit 220 for specifying an identifier of a cell in which communication service is provided; a control unit 290 for controlling detection of a cell around the cell in which communication service is provided and its halt, or operation of reselection of a cell and its halt; and a determination unit 230 for comparing non-target cell identifiers which are recorded in an ID table which registers identifiers of non-target cells which are cells for which the detection is halted or cells for which the reselection is halted at the time communication service is provided, and a cell identifier in which communication service is provided which is an identifier of the cell in which communication service is provided and which the cell identification unit 220 specified, and outputting a determination result on the basis of the comparison, wherein the control unit 290 controls the detection or the reselection on the basis of the determination result of the determination unit 230.

This application claims priority based on Japanese Patent Application No. 2012-011077 filed on January 23, 2012 and the disclosure thereof is incorporated herein in its entirety.

Although the present invention has been explained with reference to the exemplary embodiments above, the present invention is not limited to the exemplary embodiments mentioned above. Various changes which a person skilled in the art can understand within the scope of the present invention can be performed in the composition of the present invention and details.

### [Reference Signs List]

- 11: Wireless communication apparatus
- 12: CPU
- 13: Bus
- 14: ROM
- 15: USIM control unit
- 16: Non-volatile memory control unit
- 17: Working memory
- 18: Key input unit
- 19: Display control unit
- 20: Display unit
- 21: Send and receive unit
- 22: Cell identification unit
- 23: Determination unit
- 24: Automatic detection control unit
- 25: Automatic detection unit
- 26: Reselection control unit
- 27: Reselection unit
- 28: Different RAT detection unit
- 29: Control unit
- 110: Wireless communication apparatus
- 220: Cell identification unit
- 230: Determination unit
- 290: Control unit

## Claims

1. A wireless communication apparatus comprising:
cell identification means for specifying an identifier of a cell in which communication service is provided;
control means for controlling detection of a cell around the cell in which communication service is provided and its halt, or operation of reselection of a cell and its halt; and
determination means for comparing non-target cell identifiers recorded in an ID table registering identifiers of non-target cells which are cells for which the detection is halted or cells for which the reselection is halted at the time communication service is provided, and a cell identifier which is an identifier of the cell specified by the cell identification means in which communication service is provided, and for outputting a determination result on the basis of the comparison;
wherein the control means controls the detection or the reselection on the basis of the determination result of the determination means.

2. The wireless communication apparatus according to claim 1, wherein the control means operates the detection or the reselection in case the determination means determined that the cell identifier in which communication service is provided is different from the non-target cell identifier.

3. The wireless communication apparatus according to claim 1, wherein the ID table includes RAT information which is related to the identifier of the non-target cell,
the determination means compares the RAT information and the RAT information in use, and
the determination means operates the detection or the reselection, in case the cell identifier in which communication service is provided is determined to be different from the non-target cell identifier and the RAT information and the RAT information in use are determined to be different.

4. The wireless communication apparatus according to any one of claims 1 to 3, wherein
the cell identification means counts, each time an identifier is specified, a number of times of being specified; and
in case the number of times being specified exceeds a threshold value, the cell identification means records the identifier in the ID table as a non-target cell.

5. A wireless communication program which makes a computer execute:
a cell identification processing for specifying an identifier of a cell in which communication service is provided;
a control processing for controlling detection of a cell around the cell in which communication service is provided and its halt, or an operation of reselection of a cell and its halt;
a determination processing for comparing a non-target cell identifier recorded in an ID table recording identifiers of non-target cells which are cells for which the detection is halted or cells for which the reselection is halted at the time communication service is provided, and a cell identifier which is an identifier of the cell specified by the cell identification processing in which communication service is provided, and for outputting a determination result; and
the control processing for operating the detection or the reselection on the basis of the determination result of the determination processing.

6. The wireless communication program according to claim 5, wherein the wireless communication program makes the computer execute the control processing for operating the detection or the reselection in case the cell identifier in which communication service is provided is determined to be different from the non-target identifier.

7. The wireless communication program according to claim 6, wherein the ID table includes RAT information which is related to the identifier of the non-target cell,
and which makes the computer execute the determination processing for comparing the RAT information and the RAT information in use, and
the control processing for operating the detection or the reselection in case the cell identifier in which communication service is provided and the non-target cell identifier, and the RAT information and the RAT information in use are determined to be different respectively.

8. The wireless communication program according to any one of claims 5 to 7 which makes the computer execute the cell identification processing for counting, each time an identifier is specified, a number of times of being specified, and for recording the identifier in the ID table as a non-target cell in case the number of times being specified exceeds a threshold value.

9. A wireless communication method comprising:
specifying an identifier of a cell in which communication service is provided;
controlling detection of a cell around the cell in which communication service is provided and its halt, or an operation of reselection of a cell and its halt;
comparing non-target cell identifier recorded in an ID table registering identifiers of non-target cells which are cells for which the detection is halted or cells for which the reselection is halted at the time communication service is provided, and a cell identifier which is an identifier of the cell in which communication service is provided, and determining; and
operating the detection or the reselection on the basis of the result of this determination.

10. The wireless communication method according to claim 9 comprising: operating the detection or the reselection in case the cell identifier in which communication service is provided is determined to be different from the non-target identifier.
